# EUROPEAN PATENT APPLICATION

(11) **EP 3 156 225 A1**
(43) Date of publication of application: **19.04.2017**
(21) Application number: 16193181.1
(22) Date of filing: 11.10.2016
(51) Int. Cl.: B32B 25/16, B32B 1/08, F16L 11/04

(54) **TUBE FOR HOT FOOD FLUIDS**

(30) Priority: 12.10.2015 IT UB20154575
(71) Applicant: Tubigomma Deregibus S.r.l., 35030 Saccolongo (PD) (IT)
(72) Inventor: DEREGIBUS, Andrea, 35142 PADOVA (IT)
(74) Representative: Modiano, Micaela Nadia

(57) **Abstract**

A tube for hot food fluids (10, 110), comprising:
- an inner layer (11, 111) made of HNBR hydrogenated nitrile rubber,
- one or more intermediate reinforcement layers (12, 112),
- an outer covering layer (13, 113) made of elastomeric material, for example also made of HNBR hydrogenated nitrile rubber.

## Description

The present invention relates to a tube for hot food fluids.

The tube is applied in particular in the food sector for the delivery and intake of hot food oils.

The tube according to the invention is used mainly but not exclusively in machines for the recirculation, cleaning and filtering of spent oil from food fryers.

The tube acts as a flexible connection element between the oil filtering apparatus and the recirculation apparatus and between the filtering apparatus and the oil delivery nozzle.

The application requires this tube to be suitable for the delivery of food and vegetable oils, suitable for contact with foods and not to modify the taste and/or smell of the material conveyed inside it.

The same tube can be used in other applications where a flexible connection element suitable for contact with food oil at high temperatures is required.

Such a tube is generally constituted by
- a substrate, i.e., an inner layer in direct contact with the hot fluid, made of NBR nitrile rubber,
- one or more intermediate reinforcement layers,
- and an outer covering layer, also made of NBR nitrile rubber.

NBR nitrile rubber is used since it is notoriously suitable for contact with fatty foods.

The use of such a tube for the recirculation of hot food oil from and toward fryers, therefore with very high temperatures up to 150°C, has shown that after a few months the tube undergoes unexpected swelling and softening phenomena, up to the progressive separation of the covering layer.

As a whole, it has been observed that the average lifespan of such a tube of the known type that is currently commercially available varies between six and twelve months.

These events have prompted users of tubes of the known type to request manufacturers to find a solution to these drawbacks.

The aim of the present invention is to provide a tube for hot food fluids that is capable of ensuring a higher performance than tubes currently commercially available for this type of application.

Within this aim, an object of the invention is to provide a tube for hot food fluids that has a longer average lifespan than known tubes, even in cases of highly demanding applications such as the transit of hot oils, for example for fryers, at temperatures around 150°C.

This aim, as well as these and other objects that will become better apparent hereinafter, are achieved by a tube for hot food fluids, characterized in that it comprises
- an inner layer made of HNBR hydrogenated nitrile rubber,
- one or more intermediate reinforcement layers,
- an outer covering layer made of elastomeric material.

Further characteristics and advantages of the invention will become better apparent from the description of two preferred but not exclusive embodiments of the tube according to the invention, illustrated by way of nonlimiting example in the accompanying drawings, wherein:
Figure 1 is a schematic perspective view of a tube according to the invention in a first embodiment thereof;
Figure 2 is a schematic perspective view of a tube according to the invention in a second embodiment thereof.

With reference to the figures, a tube for hot food fluids according to the invention is generally designated in a first embodiment by the reference numeral 10.

The tube 10 comprises:
- an inner layer 11, in direct contact with a fluid in transit, made of HNBR hydrogenated nitrile rubber,
- one or more intermediate reinforcement layers 12,
- an outer covering layer 13, made of elastomeric material.

The covering layer 13 is also made of HNBR hydrogenated nitrile rubber.

Said one or more intermediate reinforcement layers 12 comprise, in this first embodiment, at least one textile reinforcement layer 14, which is resistant to high temperatures, and in particular comprise two layers 14 and 15 of textile reinforcement resistant to high temperatures, with the interposition of a filler layer 16 made of elastomeric material.

The layers of textile reinforcement 14 and 15 resistant to high temperatures are made of PET polyester, but it is to be understood that other textile materials that have in any case a resistance to high temperatures, such as aramid fabric and the like, may also be used.

The filler layer 16 made of elastomeric material is advantageously made of HNBR hydrogenated nitrile rubber, like the inner layer 11 and the covering layer 13.

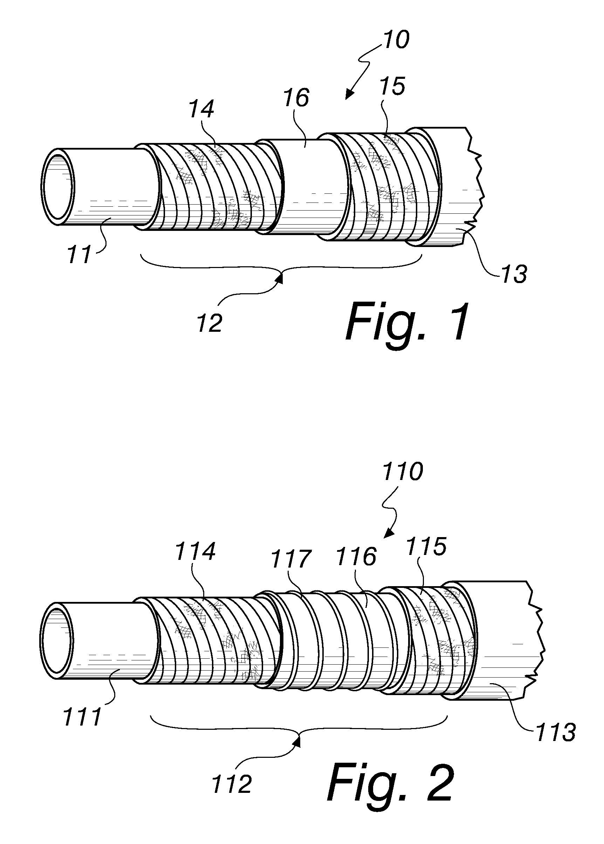

In a second embodiment thereof, the tube according to the invention, designated by the reference numeral 110 in Figure 2, comprises:
- an inner layer 111, in direct contact with a fluid in transit, made of HNBR hydrogenated nitrile rubber,
- one or more intermediate reinforcement layers 112,
- an outer covering layer 113 made of elastomeric material.

The covering layer 113 is also made of HNBR hydrogenated nitrile rubber.

Said one or more intermediate reinforcement layers 112 comprise a reinforcement spiral 117.

The use of HNBR is derived from experimental investigations, after it was realized that the problem of softening, swelling and separations in the various layers of known tubes made of NBR was due to the operating conditions of the NBR, which were at the limit of the critical conditions of this material.

The difficulty in understanding the phenomenon that damaged tubes of the known type was due to the fact that this phenomenon began by affecting first the innermost layers, becoming evident on the covering layer only when the rest of the layers of the tube, the inner and intermediate ones, had already been affected by it, wherein the inner and intermediate layers are not visible when the tube is installed and in use.

The reinforcement spiral 117 is made of metallic material, for example galvanized stainless carbon steel.

As an alternative, the reinforcement spiral 117 is made of thermoplastic material.

The layers of textile reinforcement 114 and 115 resistant to high temperatures are made of PET polyester.

The filler layer 116 made of elastomeric material is advantageously made of HNBR hydrogenated nitrile rubber, like the inner layer 111 and the covering layer 113.

Known tubes made of NBR nitrile rubber exhibit softening of the layers of rubber, linked to the flexing of the tube and to the frequent stresses of use, and cause a progressive separation of the rubber covering layer from the body of the tube and a consequent risk of leakage of hot fluid.

Only by analyzing in depth and carefully the softening, deformation and separation situations, as well as the problems of permeability to hot oil, of all the layers of known NBR tubes, does one understand that the problem solved by the invention cannot be ascribed only to the covering layer but affects all the layers, making the solution to this problem nontrivial and therefore making the invention non-obvious.

The tube according to the invention, with an inner layer, a covering layer and a filler layer made of HNBR hydrogenated nitrile rubber, ensures a higher performance than known tubes with layers of NBR nitrile rubber, since it has a higher resistance to hot oils, and to high temperatures, i.e., to the neighborhood of 150°C, and the inner and covering layers are much less subject to swelling and permeation upon contact with animal and vegetable fats and oils.

In particular, the inner layer 11 made of hydrogenated nitrile rubber acts as a barrier against the oil conveyed inside the tube, preserving the adjacent intermediate reinforcement layers 12 from permeation and contact with the hot oil.

Therefore, the useful lifespan of the tube 10 and 110 with at least the inner layer 11 and 111 made of HNBR is longer with respect to the tube manufactured with NBR nitrile rubber.

The HNBR hydrogenated nitrile rubber, which normally is white and in any case is of the food-grade type, has a variable thickness in accordance with the requirements of use or the choices of the manufacturer.

The tube 10 and 110 according to the invention is provided with textile reinforcements capable of ensuring the resistance of the tube to the operating pressures required by the specific use.

The material of the textile reinforcement that is normally used is polyester (PET), capable of withstanding heat up to the temperatures indicated in the technical specification of the tube (150°C), but it is possible to use different textile materials that in any case have a resistance to high temperatures (e.g., aramid fabric).

Commercially available tubes used for this type of application currently use steel fabrics.

The choice to use, for the intermediate reinforcement layers 14, 15, 114 and 115, fabrics which are not metallic but are in any case resistant to high temperatures increases the performance of the tube, since thermal conductivity is much lower with respect to known tubes with metallic reinforcement fabric.

In the specific case, by replacing the metallic reinforcement with a textile reinforcement a thermal reduction in the conduction of heat within the body of the tube is achieved.

The thermal reduction provided by the textile reinforcement allows to reduce considerably the thermal stress of the heat on the layers that are adjacent to the textile reinforcement.

Furthermore, it is possible to insert in the tube 110 according to the invention a reinforcement spiral 117 that is wound in the tube itself with an inclination and a pitch that depend on the requirements of application and production.

The arrangement and number of spirals can vary and depend on the production technology and on the type of characteristics sought.

The reinforcement spiral 117, as mentioned above, can be made of metallic or thermoplastic material.

The choice of the material, the arrangement and the number of spirals depend on the manufacturer and on the type of performance required of the tube.

It is to be understood that the invention also relates to the use of HNBR hydrogenated nitrile rubber to provide tubes for hot food fluids as described above.

A tube 10 and 110 according to the invention is provided with a per se known method by winding in a helical arrangement around a metallic tubular core multiple successive layers of crude rubber and reinforcement fabric, optionally with a reinforcement spiral made of metallic or thermoplastic material.

Alternative production methods for tubes according to the invention are currently known, for example with an inner layer that is extruded and fitted on the metallic tubular core, followed then by successive layers of crude rubber and reinforcement fabric, optionally with a reinforcement spiral made of metallic or thermoplastic material.

The tubular intermediate component, supported by the metallic core, is inserted in a boxlike container for the execution of a rubber vulcanization process, for example by heating by Joule effect the metallic core itself or, as an alternative, by means of steam under pressure, or with other alternative vulcanization methods.

The tube is then extracted from the vulcanization container and the metallic supporting core is extracted from it, for example by injecting air into the metallic tubular core, which is provided with a series of radial holes by means of which the compressed air causes the separation of the vulcanized rubber from said metallic core, which is simultaneously extracted.

In practice it has been found that the invention achieves the intended aim and objects.

In particular, the invention provides a tube for hot food fluids that is capable of lasting longer than currently commercially available tubes used in the food sector for the delivery and suction of hot food oils, for example in machines for the recirculation, cleaning and filtering of spent oil from food fryers.

Therefore, the invention provides a tube that has a higher resistance to hot oils, to high temperatures, is less exposed to the risk of swelling and is capable of a lower permeability upon contact with animal and vegetable fats and oils with respect to similar tubes of the known type.

Furthermore, the invention provides a tube with textile reinforcements resistant to high temperatures and with low thermal conductivity that are capable of facilitating a thermal barrier against the propagation of heat between the layers of the tube.

Moreover, the invention provides a tube in which all the layers, if they are all made of HNBR, have a comparable degree of permeability, this avoiding the accumulation and stagnation of the fluid conveyed between said layers, preserving them from swelling and consequent separation.

The invention thus conceived is susceptible of numerous modifications and variations, all of which are within the scope of the appended claims; all the details may further be replaced with other technically equivalent elements.

In practice, the components and the materials used, so long as they are compatible with the specific use, as well as the contingent shapes and dimensions, may be any according to the requirements and the state of the art.

The disclosures in Italian Patent Application No. 102015000060379 (UB2015A004575) from which this application claims priority are incorporated herein by reference.

Where technical features mentioned in any claim are followed by reference signs, those reference signs have been included for the sole purpose of increasing the intelligibility of the claims and accordingly such reference signs do not have any limiting effect on the interpretation of each element identified by way of example by such reference signs.

## Claims

1. A tube for hot food fluids (10, 110), **characterized in that** it comprises
- an inner layer (11, 111) made of HNBR hydrogenated nitrile rubber,
- one or more intermediate reinforcement layers (12, 112),
- an outer covering layer (13, 113) made of elastomeric material.

2. The tube according to claim 1, **characterized in that** said covering layer (13) is made of HNBR hydrogenated nitrile rubber.

3. The tube according to one or more of the preceding claims, **characterized in that** said one or more intermediate reinforcement layers (12) comprise at least one textile reinforcement layer (14) that is resistant to high temperatures.

4. The tube according to one or more of the preceding claims, **characterized in that** said one or more intermediate reinforcement layers (12) comprise two layers of textile reinforcement resistant to high temperatures (14, 15), with the interposition of a filler layer made of elastomeric material (16).

5. The tube according to one or more of the preceding claims, **characterized in that** said layers of textile reinforcement resistant to high temperatures (14, 15) are made of PET polyester or other different textile materials that have a resistance to high temperatures, such as aramid fabric and the like.

6. The tube according to one or more of the preceding claims, **characterized in that** said filler layer made of elastomeric material (16) is made of HNBR hydrogenated nitrile rubber.

7. The tube according to one or more of the preceding claims, **characterized in that** said one or more intermediate reinforcement layers (112) comprise a reinforcement spiral (117).

8. The tube according to one or more of the preceding claims, **characterized in that** said reinforcement spiral (117) is made of metallic material.

9. The tube according to one or more of the preceding claims, **characterized in that** said reinforcement spiral (117) is made of thermoplastic material.

10. Use of HNBR hydrogenated nitrile rubber to provide tubes for hot food fluids according to one or more of the preceding claims.
